# EUROPEAN PATENT APPLICATION

(11) **EP 1 626 281 A1**
(43) Date of publication of application: **15.02.2006**
(21) Application number: 04254652.3
(22) Date of filing: 03.08.2004
(51) Int. Cl.: G01N 35/00

(54) **Pipetting device**

(71) Applicant: The Automation Partnership (Cambridge) Limited, Royston, Hertfordshire SG8 5WY (GB)
(72) Inventor: Bargh, Adrian Neil, London N8 7LS (GB); Owen, Stephen, Bourn Cambridge CB3 7TZ (GB); Grant, Paul Simon, Cambridge CB1 2DY (GB)
(74) Representative: Brunner, Michael John

(57) **Abstract**

A pipetting device 1 has top and bottom supports 2, 43, the first support supporting a pipetting head 20 and the second support 43 defining a location for one or more vessels 42 or substrates to or from which fluid is to be pipetted in use. The pipetting head 20 has a two-dimensional array of pipetting cylinders 23 having pistons 24 for controlling the aspirating or dispensing of liquid, each pipetting cylinder piston 24 being connected to a platen 25 for simultaneous movement of the pistons within the cylinders 23. The pipetting head 20 and the second support 43 are relatively movable to one another between an operating and a retracted relationship. A detachable pipetting tip holder 50 has a two-dimensional array of pipetting tips 32 which are connectable to the pipetting cylinders 23 for aspirating liquid from or dispensing liquid into or onto a corresponding vessel 42. The pipetting head 20 is operative to cause the pistons 24 of the pipetting cylinders 23 to move simultaneously, and each of the pipetting tips 32 is individually movable in the direction of the vessel 42 relative to the pipetting tip holder 50.

## Description

The present invention relates to a pipetting device and, more particularly to a pipetting device for use in an automated or semi-automated chemical or biological processing system.

In automated or semi-automated chemical or biological processing systems small quantities of liquids (which term includes solutions or suspensions as well as pure liquids) are often required to be moved between, into or from wells in microtitre plates or the like or other substrates, to or from storage vessels, from supply reservoirs, or to waste. Such liquid handling is often required to be carried out under highly controlled conditions such that very accurate quantities of fluids are moved.

Pipetting devices have been developed for such processes, for example as illustrated in WO-A-2003/011462, which aims at providing a pipetting device having a simple construction with a pipetting volume in which an actuator moves and which is connected to a pipetting tip or point in a fluid-tight manner. Plural such devices can be arranged in a row as described in WO-A-2003/011462.

While such devices provide a degree of flexibility in operation, there is a need for a pipetting device with greater operational functionality.

According to the present invention there is provided a pipetting device having
first and second supports, the first support supporting a pipetting head and the second support defining a location for one or more vessels or substrates to or from which fluid is to be pipetted in use;
a pipetting head supported on the first support, comprising a two-dimensional array of pipetting cylinders having pistons for controlling the aspirating or dispensing of liquid from or to one or more of the vessels or substrates, each pipetting cylinder piston being connected to a platen for simultaneous movement of the pistons within the cylinders, and the pipetting head and the second support being relatively movable to one another between an operating and a retracted relationship;
a detachable pipetting tip holder comprising a two-dimensional array of pipetting tips connectable to the pipetting cylinders for aspirating liquid from or dispensing liquid into or onto a corresponding vessel or substrate respectively; wherein
the pipetting head is operative to cause the pistons of the pipetting cylinders to move simultaneously; and
each of the pipetting tips is individually movable in the direction of a corresponding vessel or substrate relative to the pipetting tip holder.

By providing, multiple degrees of movement of the pipetting tips relative to the vessel or substrate greater operational flexibility results.

The connection of each pipetting cylinder piston to a platen for simultaneous movement of the pistons within the cylinders is advantageous because only one pipetting piston movement motor is needed.

The pipetting head may include a plurality of manifolds disposed between the pistons and the pipetting tip holder through which individual pipetting tips are arranged to be connected to plural ones of the pipetting cylinders. This allows for flexibility in attaching different arrangements of pipetting tips to the pipetting head.

Each pipetting tip is preferably selectively connectable to an associated pipetting cylinder or cylinders to allow independent actuation of the pipetting tips and each pipetting tip is preferably connected to the associated pipetting cylinder or cylinders via a valve. Each valve is capable of independent operation to allow or prevent fluid flow between the pipetting tip and the associated pipetting cylinder or cylinders. The valves may also be capable of venting air or gas from the associated pipetting cylinder or cylinders.

Each pipetting tip is preferably mounted on a plunger which includes a piston disposed in a cylinder for sliding movement therealong, each pipetting tip plunger being movable between a retracted and an operative position within its associated cylinder.

Each pipetting tip may include a flexible portion arranged to allow the tip to move relative to the pipetting tip holder to accommodate inconsistencies in the distance between the pipetting tip holder and the substrate or vessels.

The normal position of the tip may be defined by a shoulder against which a portion of the tip engages to define a stop.

A pipetting system including a pipetting device according to the invention may have a plurality of pipetting tip holders interchangeably connectable to the pipetting head, at least some of the pipetting tip holders having different numbers of tips in the array.

One example of a pipetting device according to the present invention will now be described with reference to the accompanying drawings, in which:
Figures 1 to 6 illustrate the device (partially sectioned) from one side with components in various positions during pipetting procedures; and
Figures 7 and 8 illustrates one pipetting head of such a device, partially sectioned.

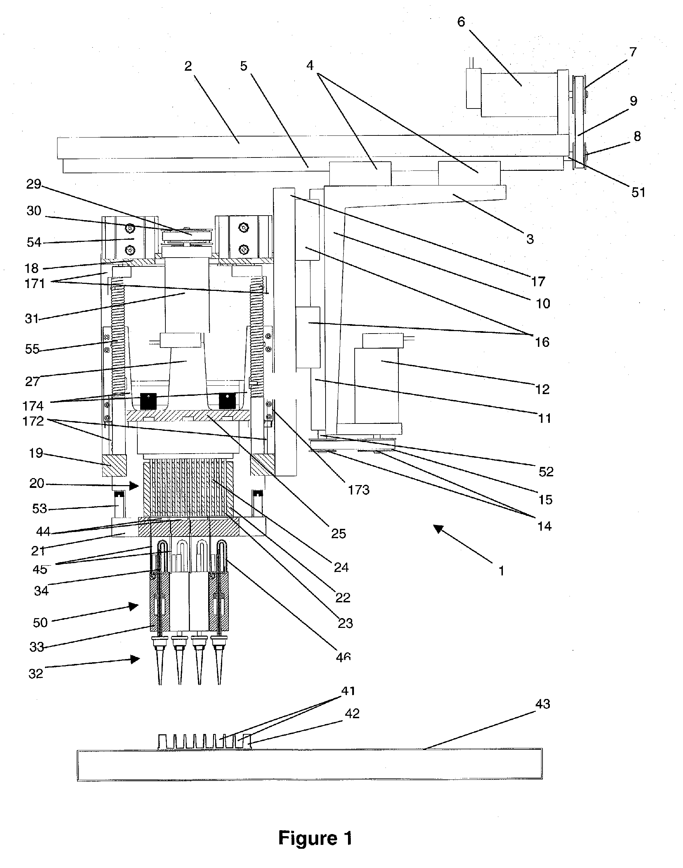

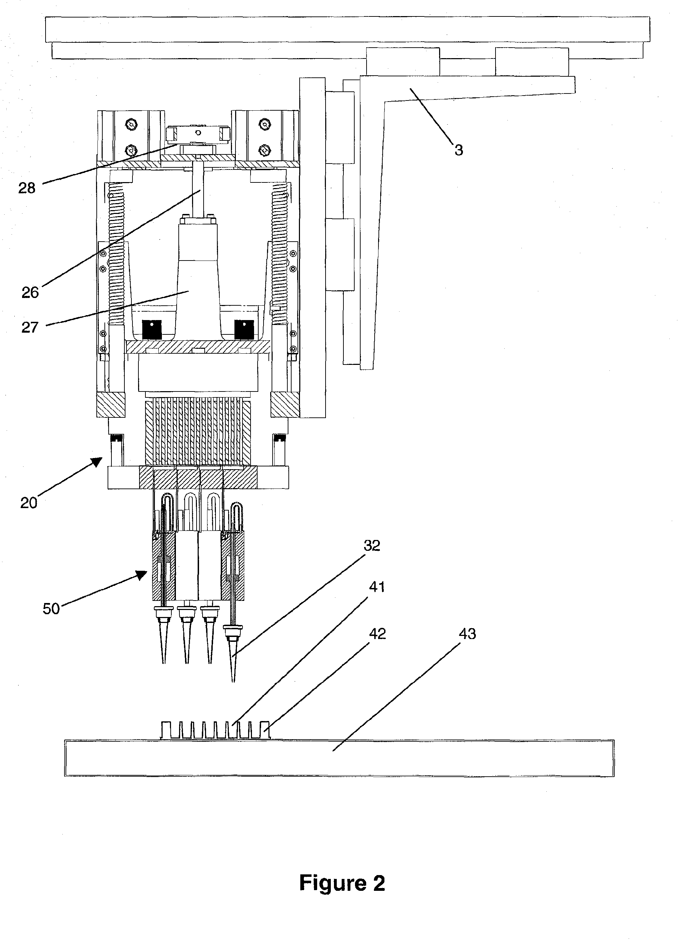

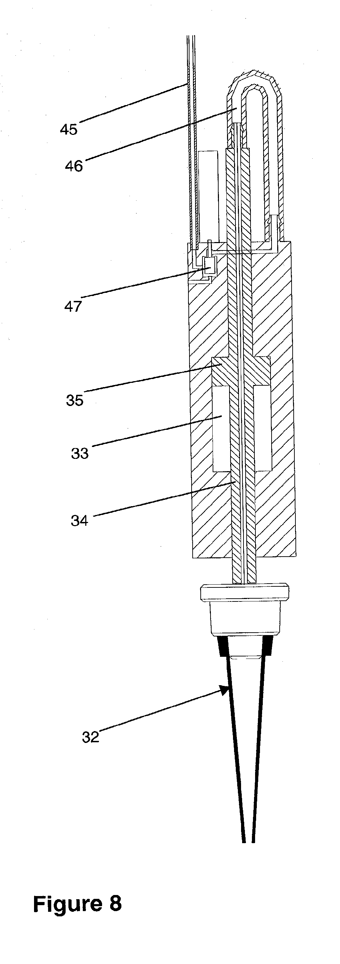

The components of the device are first described with reference to Figures 1, 7 and 8 and the operation of the device described thereafter with reference to Figure 1 and Figures 2 to 6. The reference numerals are not repeated in Figures 2 to 6, except as required.

Figure 1 shows a pipetting device 1 which is mounted for horizontal movement on a track 2 via a carriage 3 which provides a top support for the pipetting device 1. The carriage 3 is mounted to the track 2 by means of two pairs of bearing blocks 4 (one behind the other in Figures 1 to 6) which engage with respective linear bearing rails 5 to enable the carriage 3 to slide along the bearing rails. The movement of the carriage 3 is determined by a screw-threaded drive rod or drive screw 51 that extends along the entire length of a bearing rail 5 and which engages with a threaded nut (not shown) attached to the carriage, whereby rotation of the drive rod 51 causes translation of the carriage 3. The drive screw 51 is moved by means of a rotary servo-motor 6 connected, via pulleys 7,8 and a drive belt 9, to the screw-threaded drive rod.

The carriage 3 includes a depending leg or bracket 10 which carries linear bearing rails 11 similar to the rails 5. Two further pairs of bearing blocks 16 are mounted to the rails 11 and fixed to the side of a support member 17 which, in turn, carries a pipetting head 20. A further screw-threaded drive rod or drive screw 52, which runs the length of the linear bearing rail 11, engages with a threaded nut (not shown) attached to the support member 17 in order to enable the support member to be driven, in a similar fashion to the movement of the carriage 3, the drive screw 52 being driven by a further rotary servo-motor 12 through pulleys 13, 14 and a drive belt 15.

The support member 17 mounts a head bracket assembly 18, a lower bracket assembly 19 and a frame 171, and a pipetting head 20 is supported on the frame by means of pairs of slide rails 172 on the frame and corresponding bearing blocks 173 located on a top bracket 174 of the pipetting head. The pipetting head 20 carries a pipetting tip holder 50 which has a manifold plate 21 (see below) above which is disposed a block 22 of pipetting cylinders 23 which are arranged in a two-dimensional array, each of the pipetting cylinders 23 having a piston 24 disposed therein, actuation of which causes pipetting. The pistons 24 are commonly connected to a platen 25 for simultaneous movement together.

A bearing housing 27 is secured to the top of the platen 25 and houses a ballscrew nut (not shown) which engages with a further screw-threaded drive rod or drive screw 26 (see Figures 2 to 6). The drive screw 26 is supported in a bearing in the head bracket assembly 18 and connected to a pulley 28 (see Figures 2 to 6) which, in turn, is connected via a drive belt 29 to a further pulley 30 mounted on the drive shaft of a rotary servo-motor 31 (see Figure 1 only), operation of which rotates the drive screw 26 in order to move the platen 25.

The pipetting tip holder 50 is detachably secured to the bottom of the pipetting head 20 (as described below) and the manifold plate 21 mounts a support block 33 which carries a linear or two-dimensional array of pipetting tips 32 which are thus removably mounted on the pipetting head 20.

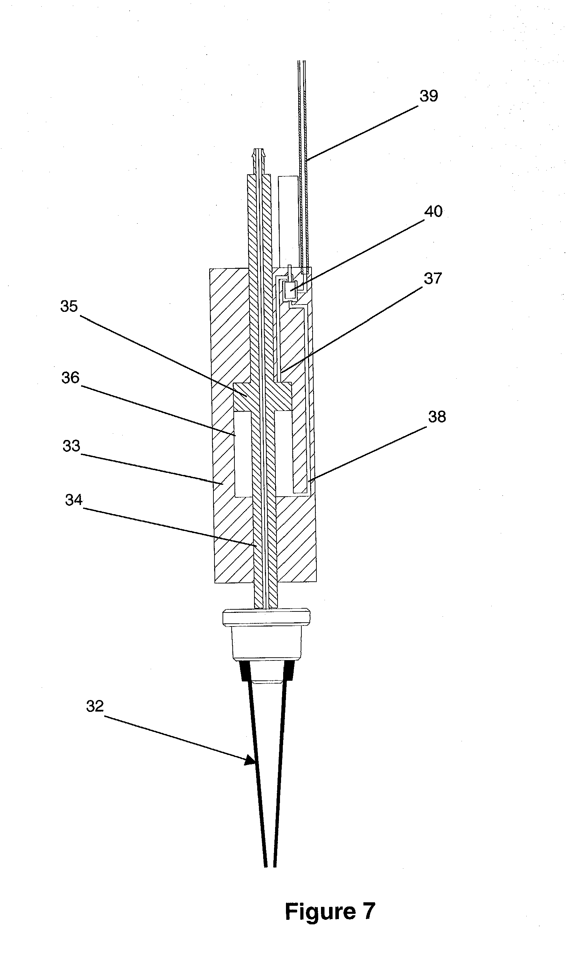

Groups of the pipetting cylinders 23 are connected by manifolds 44 to an array of pipetting tips 32 via a supply passage 45 which in turn connects through a flexible supply tube 46 on the top of the support block 33 to the top of the hollow plunger 34. A suitable valve 47 is provided which allows venting of the channels 45 or else connects the flexible supply tubes 46 to the supply channels 45 during operation of the pipetting tips 32. Each of the pipetting tips 32 is removably mounted on the support block 33 by means of a hollow plunger 34 (see particularly Figure 7), the plunger 34 having an integral piston 35 disposed substantially centrally along its length and arranged to be movable within a cylinder 36 within the support block 33. Movement of the piston 35 and hence the plunger 34 and the tip 32 is controlled pneumatically via supply lines 37, 38 formed in the block 33 and compressed air supplied through a supply line 39, to the required passage 37 or 38 via a valve 40 controllable to adjust the flow. This arrangement provides an 'addressable' tip array as described below.

The tips 32 are used to pipette liquids into and out of a microtitre plate 42 having wells 41 as is conventional, the microtitre plate 42 being supported on a lower support 43 of the pipetting device.

The pipetting tip holder 50 is detachable as required to enable alternative ones of plural tip holders 50 to be attached and detached as required so that, for example, pipette holders with a higher or lower density array of pipette tips can be used to suit a desired microtitre plate 42. Microtitre plates having, for example, 384, 96 or 24 wells may be used.

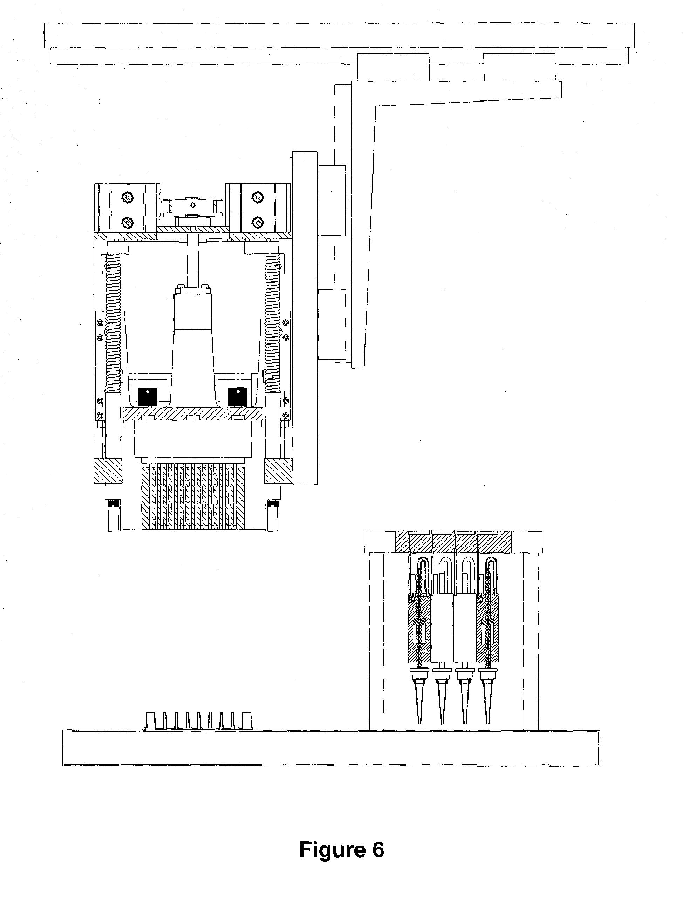

The pipetting tip holder 50 is attached and detached through the action of two pneumatic lift cylinders 54, one at each side of the pipette head 20. Each cylinder 54 is attached to a respective lift rod 53 which runs through a spring 55. The lift rods 53 engage with the manifold plate 21 of the pipetting tip holder 50 so that when the lift rods are retracted (as shown) the pipetting tip holder is pulled up and the manifold plate 21 seals against the underside of the pipetting head 20. The springs 55 assist the lift cylinders 54 to provide additional sealing force. When the lift rods 53 are extended they can be disengaged from the pipetting tip holder 50 and the pipetting tip holder can be parked on a separate stand (see Figure 6).

The pistons 24 are all connected to a platen 25 and therefore move simultaneously. This arrangement is well suited to processes which require plural wells to be aspirated or supplied simultaneously, but additionally, as the tips 32 are addressable individually using the valves 40, individual dispensing into or aspirating from selected wells 41 of the microtitre plate 42 is possible.

Microtitre plates 42 can be moved onto and off the support 43 by means of a robotic device (not shown) as required.

The same example can be used with a fixed tip array in place of the addressable tip array described above. Such a configuration is useful where a high density array of pipette tips is needed to transfer large numbers of samples in parallel between different microtitre plates with a high density of wells.

A typical operation of the device is illustrated in Figures 2 to 6. Note in particular that the motors and pulleys described in connection with Figure 1 are not shown in the remaining figures, again for the purposes of clarity.

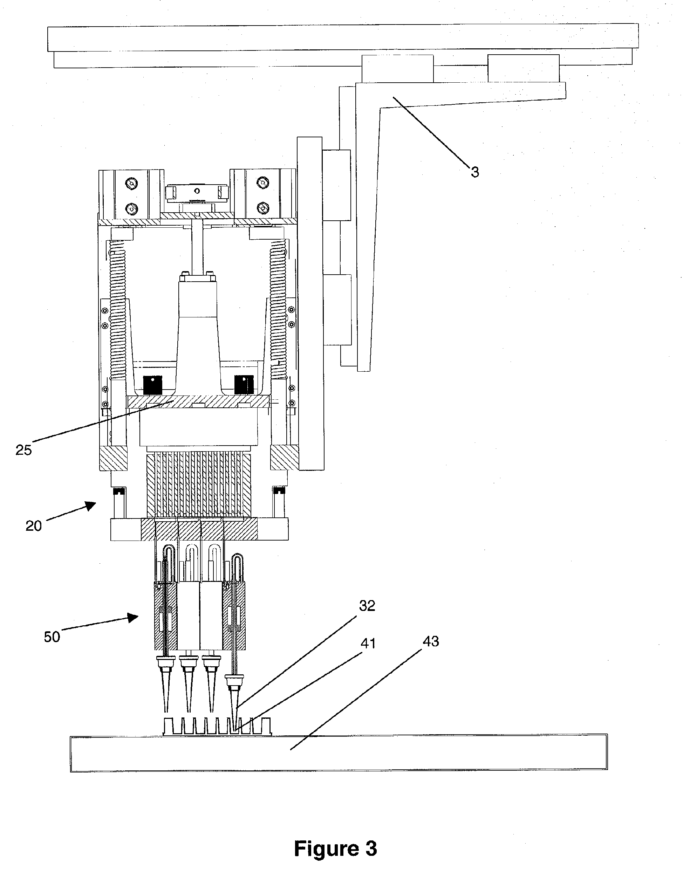

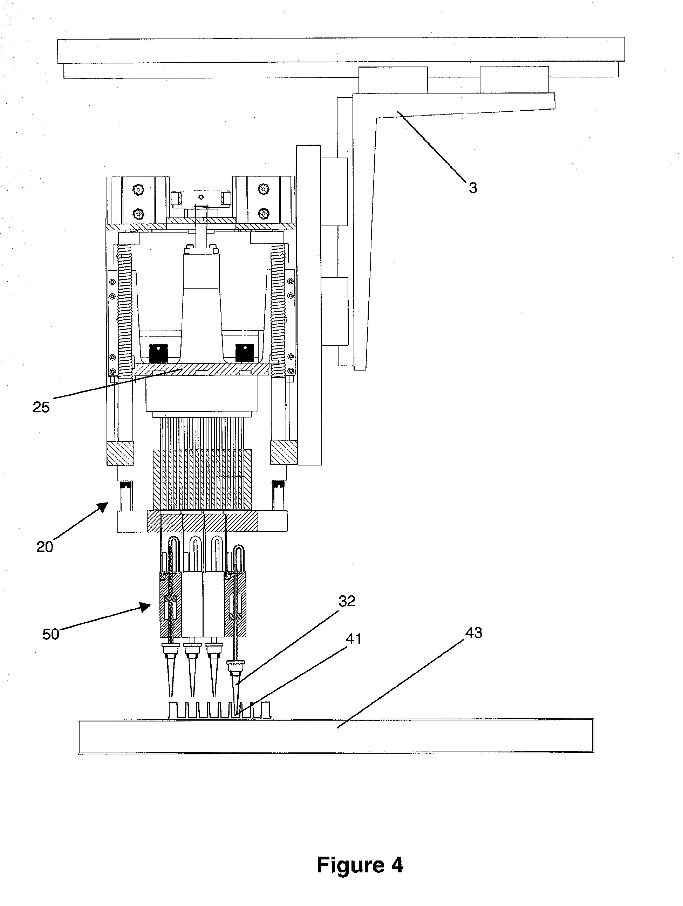

From the position shown in Figure 1 a selected pipetting tip 32 is extended by operation of the pneumatic control valve 40 as shown on the right hand side of the pipetting tip holder 50 in Figure 2. Figures 1 and 2 show the tip disposed above a destination well 41, the tip having been moved there by suitable operation and movement of the motor 6 driving the carriage 3. From the position shown in Figure 2 the pipette head 20 and pipetting tip holder 50 are moved downwardly (by the operation of the motor 12) until the relevant pipetting tip 32 enters one of the wells 41 in the microtitre plate 42 (see Figure 3), liquid in the well 41 then being aspirated into the tip 32 by controlled upwards movement of the platen 25 relative to the tip holder 50 to, for example, the position shown in Figure 4.

Plural ones of the pistons 24 cause liquid to be drawn up into the tip 32.

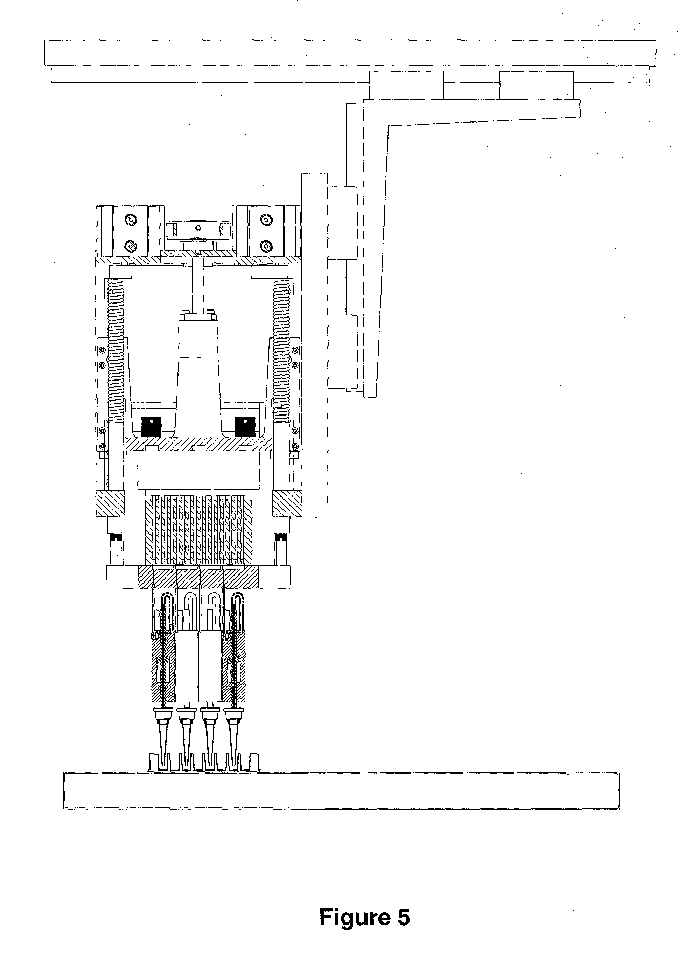

Figure 5 shows, at a different (supply) stage in a pipetting process, a number of the pipetting tips 32 disposed in corresponding wells 41 of the microtitre plate 42 and the pipetting pistons 24 having been moved downwardly through the pipetting cylinders 23 so as to supply liquid from the pipetting tips 32 into the wells 41. The pipetting tips 32 can then be retracted from the wells in the microtitre plate, the speed of retraction of the tips being carefully controlled.

Figure 6 shows the pipetting tip holder 50 having been removed from the pipetting head 20 and stored temporarily to one side, on the lower support 43.

As will be appreciated from the drawings and the description above, there are effectively 3 degrees of vertical movement that may take place. Firstly, the pipetting tips 32 can move, on the plungers 34, relative to the support blocks 33 and in turn these can be moved, carried on the manifold plate 25, secured to the lower bracket assembly 19, by operation of the motor 12, relative to the carriage 3 and the track 2. Additionally, the pipetting head 20 mounted on the brackets assemblies 18 and 19 is operative by means of the motor 31 to cause the pistons 24 of the pipetting cylinders 23 in the block 22 to be moved simultaneously by controlled movement of the platen 25.

## Claims

1. A pipetting device having
first and second supports, the first support supporting a pipetting head and the second support defining a location for one or more vessels or substrates to or from which fluid is to be pipetted in use;
a pipetting head supported on the first support, comprising a two-dimensional array of pipetting cylinders having pistons for controlling the aspirating or dispensing of liquid from or to one or more of the vessels or substrates, each pipetting cylinder piston being connected to a platen for simultaneous movement of the pistons within the cylinders, and the pipetting head and the second support being relatively movable to one another between an operating and a retracted relationship;
a detachable pipetting tip holder comprising a two-dimensional array of pipetting tips connectable to the pipetting cylinders for aspirating liquid from or dispensing liquid into or onto a corresponding vessel or substrate respectively; wherein
the pipetting head is operative to cause the pistons of the pipetting cylinders to move simultaneously; and
each of the pipetting tips is individually movable in the direction of a corresponding vessel or substrate relative to the pipetting tip holder.

2. A device according to claim 1, wherein the pipetting head includes a plurality of manifolds disposed between the pistons and the pipetting tip holder through which individual pipetting tips are arranged to be connected to plural ones of the pipetting cylinders.

3. A device according to claim 1 or claim 2, wherein each pipetting tip is selectively connectable to an associated pipetting cylinder or cylinders.

4. A device according to claim 3, wherein each pipetting tip is connected to the associated pipetting cylinder or cylinders via a valve.

5. A device according to claim 4, wherein each valve is capable of independent operation to allow or prevent fluid flow between the pipetting tip and the associated pipetting cylinder or cylinders.

6. A device according to claim 5, wherein each valve is also capable of venting air or gas from the associated pipetting cylinder or cylinders.

7. A device according to any of claims 1 to 6, wherein each pipetting tip is mounted on a plunger.

8. A device according to claim 7, wherein each plunger includes a piston disposed in a cylinder for sliding movement therealong.

9. A device according to claim 8, wherein each pipetting tip plunger is movable between a retracted and an operative position within its associated cylinder.

10. A device according to claim 1, wherein each pipetting tip includes a flexible portion arranged to allow the tip to move relative to the pipetting tip holder to accommodate inconsistencies in the distance between the pipetting tip holder and the substrate or vessels.

11. A device according to claim 10, wherein the normal position of the tip is defined by a shoulder against which a portion of the tip engages to define a stop.

12. A pipetting system including a pipetting device according to any of the preceding claims, the system including a plurality of pipetting tip holders interchangeably connectable to the pipetting head.

13. A system according to claim 12, wherein at least some of the pipetting tip holders have different numbers of tips in the array.

## Amended claims

### Amended claims in accordance with Rule 86(2) EPC.

**1.** A pipetting device (1) having
first and second supports (2, 43), the first support (2) supporting a pipetting head (20) and the second support (43) defining a location for one or more vessels (42) or substrates to or from which fluid is to be pipetted in use; and **characterised by**
a pipetting head (20) supported on the first support, comprising a two-dimensional array of pipetting cylinders (23) having pistons (24) for controlling the aspirating or dispensing of liquid from or to one or more of the vessels or substrates, each pipetting cylinder piston (24) being connected to a platen (25) for simultaneous movement of the pistons (24) within the cylinders (23), and the pipetting head (20) and the second support (43) being relatively movable to one another between an operating and a retracted relationship;
a detachable pipetting tip holder (50) comprising a two-dimensional array of pipetting tips (32) connectable to the pipetting cylinders (23) for aspirating liquid from or dispensing liquid into or onto a corresponding vessel (42) or substrate respectively; wherein
the pipetting head (20) is operative to cause the pistons (24) of the pipetting cylinders (23) to move simultaneously; and
each of the pipetting tips (32) is individually movable in the direction of a corresponding vessel (42) or substrate relative to the pipetting tip holder (50).

**2.** A device (1) according to claim 1, wherein the pipetting head (20) includes a plurality of manifolds (44) disposed between the pistons (24) and the pipetting tip holder (50) through which individual pipetting tips (32) are arranged to be connected to plural ones of the pipetting cylinders (23).

**3.** A device (1) according to claim 1 or claim 2, wherein each pipetting tip (32) is selectively connectable to an associated pipetting cylinder or cylinders (23).

**4.** A device (1) according to claim 3, wherein each pipetting tip (32) is connected to the associated pipetting cylinder or cylinders (23) via a valve (47).

**5.** A device (1) according to claim 4, wherein each valve (47) is capable of independent operation to allow or prevent fluid flow between the pipetting tip (32) and the associated pipetting cylinder or cylinders (23).

**6.** A device (1) according to claim 5, wherein each valve (47) is also capable of venting air or gas from the associated pipetting cylinder or cylinders (23).

**7.** A device (1) according to any of claims 1 to 6, wherein each pipetting tip (32) is mounted on a plunger (34).

**8.** A device (1) according to claim 7, wherein each plunger (34) includes a piston (35) disposed in a cylinder (36) for sliding movement therealong.

**9.** A device (1) according to claim 8, wherein each pipetting tip plunger (34) is movable between a retracted and an operative position within its associated cylinder (23).

**10.** A device (1) according to claim 1, wherein each pipetting tip (32) includes a flexible portion arranged to allow the tip (32) to move relative to the pipetting tip holder (50) to accommodate inconsistencies in the distance between the pipetting tip holder (50) and the substrate or vessels (42).

**11.** A device (1) according to claim 10, wherein the normal position of the tip (32) is defined by a shoulder against which a portion of the tip (32) engages to define a stop.

**12.** A pipetting system including a pipetting device (1) according to any of the preceding claims, the system including a plurality of pipetting tip holders (50) interchangeably connectable to the pipetting head (20).

**13.** A system according to claim 12, wherein at least some of the pipetting tip holders (50) have different numbers of tips (32) in the array.
